# EUROPEAN PATENT SPECIFICATION

(11) **EP 1 260 777 B1**
(45) Date of publication and mention of the grant of the patent: **07.06.2006**
(21) Application number: 02076169.8
(22) Date of filing: 25.03.2002
(51) Int. Cl.: F25B 49/02, A01J 9/04

(54) **Refrigeration system for milk**
Kühlanlage für Milch
Système de refroidissement pour du lait

(30) Priority: 22.05.2001 NL 1018130
(43) Date of publication of application: 27.11.2002
(73) Proprietor: Meko Holland B.V., 9400 AC Assen (NL)
(72) Inventor: Spriensma, Sietse, 9400 AC Assen (NL)

(56) References cited:
- EP-A- 0 471 598
- DE-A- 2 200 399
- DE-A- 19 529 763
- US-A- 2 459 337
- US-A- 2 916 891
- US-A- 2 937 509
- US-A- 2 945 356
- US-A- 3 199 306
- PATENT ABSTRACTS OF JAPAN vol. 1999, no. 09, 30 July 1999 (1999-07-30) & JP 11 099825 A (CALSONIC CORP), 13 April 1999 (1999-04-13)

## Description

The invention relates to a refrigeration system for milk, comprising a milk tank provided with an evaporator, inseparably connected to the milk tank, a temperature sensor and a stirring apparatus; a refrigeration apparatus provided with a compressor, a condensor connected to the compressor, and a valve, via which the condensed cooling medium may flow towards the evaporator; and a regulator for controlling the valve and the stirring apparatus and for stopping the compressor when the temperature of the evaporator is lower than a predetermined value.

A refrigeration system of this type is known from US-A-2 916 891. The known refrigeration systems may be used for cooling milk, which is supplied twice a day within a short time span when all cows are milked substantially simultaneously. The milk stored and cooled in this way is collected for further processing for example every three days by a dairy factory. The cooling capacity of the known refrigeration systems is determined such that the milk, collected at one time can be cooled within a required time span, for example within three hours, to a required temperature, for example four degrees Celsius. A specific cooling capacity requires a compressor with a given capacity and an evaporator with an area, which is matched to this capacity. The evaporator normally is a so-called direct evaporator which is fully integrated with the milk tank and which covers a substantial area of the bottom side of the milk tank.

With the known refrigeration system, a problem arises when the dairy farmer changes over to a milk robot, which milks a cow automatically on a moment determined by the cow. The milk, which used to come in twice a day in large portions of about 15% of the volume of the milk tank, now enters in separate small portions. This means that when the milk tank has been emptied and next a quantity of milk is being delivered which is so small that only a small part of the bottom of the milk tank is covered, it may happen that the stirring apparatus cannot reach the milk. Even with a smaller compressor the temperature of the milk may drop to below freezing point, as a result of which the bottom will become frosted with milk. This situation is considered to be undesirable; it is assumed that it will reduce the quality of the milk.

The invention obviates this disadvantage and is characterised in that the temperature sensor comprises a pressure switch, connected to an exit of the evaporator and that the regulator is arranged for opening the valve or keeping the valve opened whenever the compressor is stopped and in that a storage tank for condensed cooling medium connected to the condenser is provided. Thereby the fact is used that a saturated pressure Thereby the fact is used that a saturated pressure of the cooling medium at the exit of the evaporator is substantially proportional to the temperature of the cooling medium, which means that there is substantially no dead time, while opening the valve or keeping the valve opened results in a mild after-cooling at a relatively high evaporation temperature, because the liquid cooling medium will now evaporate only slowly, at a relatively high pressure. Also when the compressor is afterwards started again, this relatively high evaporation temperature is maintained for some time, which implies that in fact a spread of the cooling capacity and an increase of the efficiency is realised.

From DE-A-195 29 763 a refrigeration system is known which utilises a pressure sensor for maintaning the saturated pressure of the cooling medium at a constant level for obtaining a constant cooling power.

A favourable embodiment of the inventive cooling system is characterised in that the pressure switch is adjusted such that the compressor is switched off when the temperature of the evaporator is lower than a predetermined temperature value for a combination of a specific milk tank and a specific evaporator, for example when the temperature of the evaporator is lower than minus four degrees Celsius. For this temperature, it has been verified experimentally for a given milk tank that even very small quantities of milk will not freeze in the tank, while the cooling capacity will be sufficient even for a relatively large supply of milk.

A favourable embodiment according to a further aspect of the invention which prevents a needless switching on and off of the compressor is characterised in that the regulator is provided with a time delay switch, for switching on again the compressor after a predetermined time delay, at the condition that the temperature of the evaporator is higher than a predetermined temperature.

With a refrigeration system of the type as described here, the compressor is lubricated with oil that has been mixed with the cooling medium. Because the inventive refrigeration system contains only a relatively small amount of cooling medium, it may happen that the compressor operates substantially without cooling medium, which would mean that the compressor is lubricated insufficient, which in turn could lead to excessive wear. A favourable embodiment of the inventive refrigeration system is therefore characterised in that between the compressor and the condensor separating means have been placed for separating oil and cooling medium and that the separating means are provided with an oil feedback pipe, for feeding back oil towards the compressor.

The invention will now be further explained with a reference to the following figures, of which:
- Fig. 1: represents a possible embodiment of a milk tank provided with a direct evaporator;
- Fig. 2: represents a block diagram of a refrigeration system according to the invention.

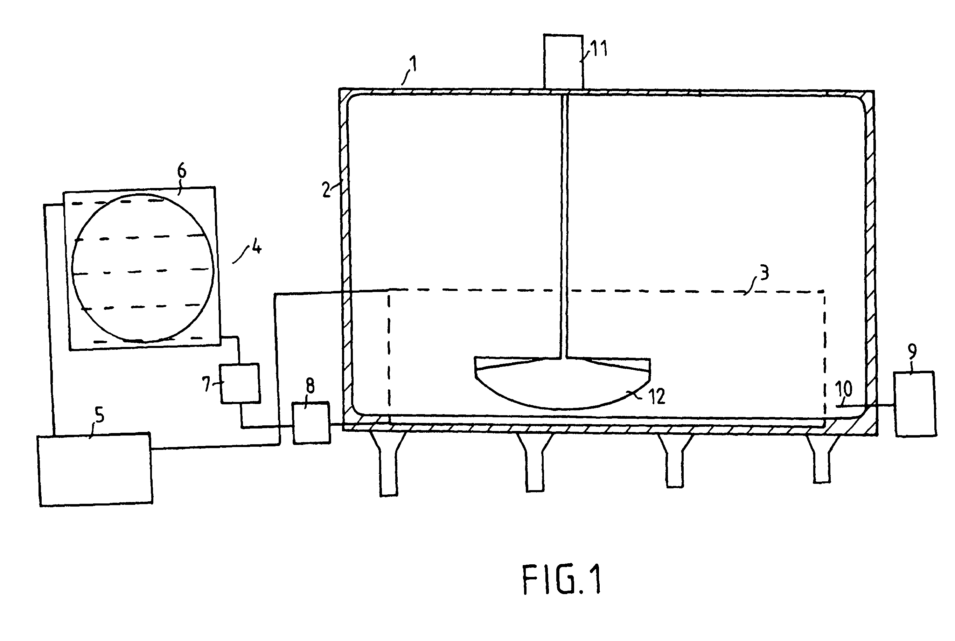

Fig. 1 represents a possible embodiment of a milk tank provided with a direct evaporator. Milk tank 1 is double-walled, having an inner tank and an outer tank, between which an insulation layer 2 is situated, shown with shaded lines. Between the inner tank and the insulation layer, an evaporator 3 is inserted which runs underneath the inner tank and which is in fact fully integrated with the inner tank. Milk tank 1 has been developed in order to be used in a classical situation, in which the cattle is milked twice a day, and in which an amount of milk of about 15% of the volume of the tank is added to the tank. That milk must quickly be brought to a temperature of four degrees Celsius. For that purpose, a refrigeration apparatus 4 is provided, comprising a compressor 5, a condensor 6, a storage tank 7 for condensed cooling medium and a valve 8. Moreover, a regulator 9 is provided to which a temperature sensor 10 is connected which measures the temperature of the milk in milk tank 1. If the temperature, measured by sensor 10 higher than four degrees Celsius, then regulator 9 will switch on compressor 5 and will open valve 8. Moreover, regulator 9 switches on a motor 11, to which a stirrer 12 is coupled which stirs the milk in milk tank 1, in order to bring about a flow alongside evaporator 3, as usual in the art. Regulator 9 opens valve 8, via which condensed cooling medium may flow towards evaporator 3. When, after some time, the milk has been cooled down to below four degrees Celsius, then valve 8 is closed and compressor 5 is switched off. For controlling the temperature of the evaporator, an expansion valve is provided, well known in the art and not shown here, which is combined with a sensor, mounted onto the evaporator and which maintains the temperature of the evaporator at a value which is optimal for the combined evaporator/milk tank. This temperature is selected rather low, as the milk collected at one time must be cooled within a required time span to a temperature of four degrees Celsius.

A new situation arises if all animals are milked individually, as is the case when a milk robot is used. Because milk tank 1 is emptied periodically, a situation may occur in which milk covers only a very small fraction of the bottom of milk tank 1 and evaporator 3. Compressor 5 and motor 11 will be switched on and the temperature of evaporator 3 will quickly drop to a relatively low temperature, determined by the sensor and the expansion valve. Because stirrer 12 cannot reach the small amount of milk, the milk is not stirred and it cannot be prevented that the bottom of milk tank 1 will become frosted with milk. A seemingly obvious way for solving this problem is to mount a smaller refrigerator apparatus 4, but in fact this does change the situation. Therefore, according to the invention, a pressure sensor 13 is connected to the output of evaporator 3 for determining the temperature of evaporator 3 and regulator 9 is adapted.

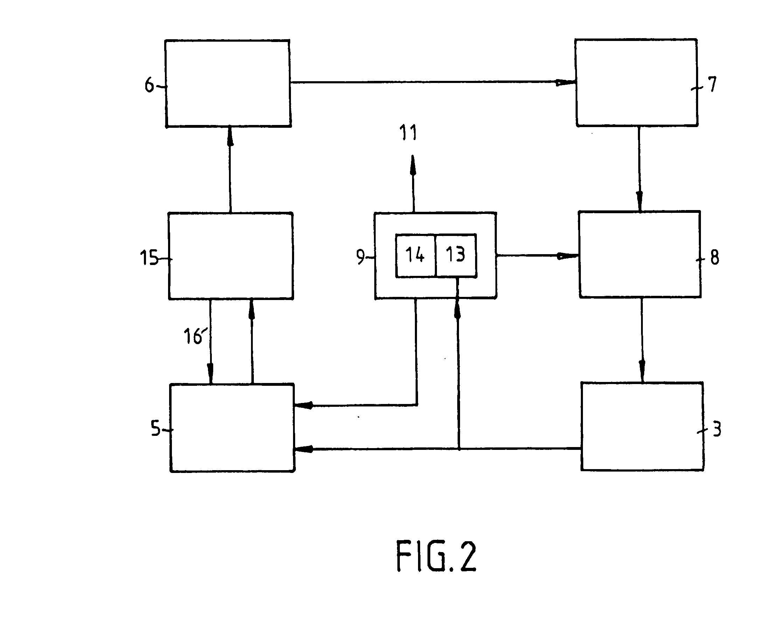

Fig. 2 represents a block diagram of a refrigeration system according to the invention. The refrigeration system comprises again an evaporator 3, a compressor 5, a condensor 6, a storage tank 7, a valve 8, and a regulator 9. In order to prevent milk from freezing in the described situation, pressure sensor 13 is added, which measures the pressure of the evaporated cooling medium leaving evaporator 3. As known as such in the art, this pressure is a direct measure of the temperature of evaporator 3. Pressure sensor 13 is connected to regulator 9, which has been adapted in such a way that at an evaporator temperature of for example minus four degrees Celsius, compressor 5 is stopped, as a result of which the cooling medium in evaporator 3 no longer evaporates and cooling no longer takes place. Valve 8 remains open; allowing substantially all condensed cooling medium to flow towards evaporator 3. Regulator 9 moreover comprises a time delay switch 14, which switches on again compressor 5 after a few minutes, at the condition that the evaporator temperature is higher than for example minus two degrees Celsius. In a refrigeration system controlled in this way, the evaporator temperature is substantially always higher than minus four degrees Celsius, which is sufficient for cooling the milk which flows in at a more or less continuous level, while the efficiency of the refrigerator apparatus is at its maximum. When controlled in this manner, the existing expansion valve is permanently open and plays consequently no role any longer.

A consequence of the inventive steering method is that the lubrication of the compressor 5 is not always guaranteed. As the lubrication takes place via oil, added to the cooling medium, this insufficient lubrication could result in an excessive wear of compressor 5. For that reason, an oil separator 15, well known in the art, is placed behind compressor 5 and the separated oil is fed back to compressor 5 via an oil feedback pipe 16.

## Claims

1. Refrigeration system for milk, comprising a milk tank (1) provided with an evaporator (3), inseparably connected to the milk tank (1), a temperature sensor (10) and a stirring apparatus (12); a refrigeration apparatus provided with a compressor(5), a condensor (6) connected to the compressor (5), and a valve (8), via which the condensed cooling medium may flow towards the evaporator (3); and a regulator (9) for controlling the valve (8) and the stirring apparatus (12) and for stopping the compressor (5) when the temperature of the evaporator (3) is lower than a predetermined value, **characterised in that** the temperature sensor (10) comprises a pressure switch, connected to an exit of the evaporator (3) and that the regulator (9) is arranged for opening the valve (8) or keeping the valve (8) opened whenever the compressor (5) is stopped and **in that** a storage tank (7) for condensed cooling medium connected to the condensor (6) is provided.

2. Refrigeration system according to claim 1, **characterised in that** the pressure switch (10) is adjusted such that the compressor (5) is switched off when the temperature of the evaporator (3) is lower than a predetermined temperature value for a combination of a specific milk tank (1) and a specific evaporator (3).

3. Refrigeration system according to claim 1, **characterised in that** the pressure switch (10) is adjusted such that the compressor (5) will be switched off if the temperature of the evaporator (3) is lower than minus four degrees Celsius.

4. Refrigeration system according to claim 2 or 3, **characterised in that** the regulator (9) is provided with a time delay switch (14), for switching on again the compressor (5) after a predetermined time delay, at the condition that the temperature of the evaporator (3) is higher than a predetermined temperature.

5. Refrigeration system according to one of the previous claims, **characterised in that** between the compressor (5) and the condensor (6) separating means (15) have been placed for separating oil and cooling medium and that the separating means (15) are provided with an oil feedback pipe (16), for feeding back oil towards the compressor (5).

## Patentansprüche

1. Kühlanlage für Milch, welche Anlage einen Milchtank (1) umfasst, versehen mit einem mit dem Milchtank (1) unzertrennlich verbundenen Verdampfer (3), einem Temperaturfühler (10) und einem Rührwerk (12); eine Kühlanlage, versehen mit einem Kompressor (5), einem mit dem Kompressor (5) verbundenen Kondensator (6) und einem Ventil (8), über welches das kondensierte Kühlmittel zum Verdampfer (3) fließen kann; und einen Regelkreis (9) für die Bedienung des Ventils (8) und des Rührwerks (12) und für das Ausschalten des Kompressors (5), wenn die Temperatur im Verdampfer (3) niedriger als ein im Voraus bestimmter Wert ist, **dadurch gekennzeichnet, dass** der Temperaturfühler (10) einen an einem Ausgang des Verdampfers (3) befestigten Druckfühler umfasst, und dass der Regelkreis (9) für das Öffnen des Ventils (8) oder für das Offenhalten des Ventils (8) eingerichtet ist, jedes Mal, nachdem der Kompressor (5) ausgeschaltet wurde, und dass ein mit dem Kondensator (6) verbundenen Speichertank (7) für kondensiertes Kühlmittel vorgesehen ist.

2. Kühlanlage gemäß Anspruch 1, **dadurch gekennzeichnet, dass** der Druckschalter (10) so eingestellt worden ist, dass der Kompressor (5) ausgeschaltet wird, wenn die Temperatur im Verdampfer (3) niedriger als eine für die Kombination eines gegebenen Milchtanks (1) mit einem gegebenen Verdampfer (3) bestimmte Temperatur ist.

3. Kühlanlage gemäß Anspruch 1, **dadurch gekennzeichnet, dass** der Druckschalter (10) so eingestellt worden ist, dass der Kompressor (5) ausgeschaltet wird, wenn die Temperatuur im Verdampfer (3) niedriger als minus vier Grad Celsius ist.

4. Kühlanlage gemäß Anspruch 2 oder 3, **dadurch gekennzeichnet, dass** der Regelkreis (9) mit einem Zeitschalter (14) versehen ist, für das nach einem im Voraus bestimmten Zeitraum erneute Einschalten des Kompressors (5), vorausgesetzt, die Temperatur im Verdampfer (3) höher als ein im Voraus bestimmter Wert ist.

5. Kühlanlage gemäß einem der vorangehenden Ansprüche, **dadurch gekennzeichnet, dass** zwischen dem Kompressor (5) und dem Kondensator (6) Separationsmittel (15) für das Separieren von Öl und Kühlmittel angeordnet worden sind, und dass die Separationsmittel (15) für die Rückführung von Öl zu dem Kompressor (5) mit einer Ölrückführleitung (16) versehen sind.

## Revendications

1. Système de refroidissement pour du lait, comprenant un réservoir de lait (1) muni d'un évaporateur (3), relié de manière inséparable au réservoir de lait (1), un capteur de température (10) et un dispositif d'agitation (12) ; un dispositif de refroidissement comprenant un compresseur (5), un condenseur (6) relié au compresseur (5) et une vanne (8), par l'intermédiaire de laquelle le milieu de refroidissement condensé peut s'écouler vers l'évaporateur (3) ; et un régulateur (9) pour commander la vanne (8) et le dispositif d'agitation (12) et pour arrêter le compresseur (5) lorsque la température de l'évaporateur (3) est inférieure à une valeur prédéterminée, **caractérisé en ce que** le capteur de température (10) comprend un commutateur de pression, relié à une sortie de l'évaporateur (3) et **en ce que** le régulateur (9) est prévu pour ouvrir la vanne (8) ou maintenir la vanne (8) ouverte à chaque fois que le compresseur (5) est arrêté, et **en ce que** l'on prévoit un réservoir de stockage (7) pour milieu de refroidissement condensé relié au condenseur (6).

2. Système de refroidissement selon la revendication 1, **caractérisé en ce que** le commutateur de pression (10) est réglé de telle manière que le compresseur (5) est commuté à l'arrêt lorsque la température de l'évaporateur (3) est inférieure à une valeur de température prédéterminée pour une combinaison d'un réservoir de lait spécifique (1) et d'un évaporateur spécifique (3).

3. Système de refroidissement selon la revendication 1, **caractérisé en ce que** le commutateur de pression (10) est réglé de telle manière que le compresseur (5) sera commuté à l'arrêt si la température de l'évaporateur (3) est inférieure à moins quatre degrés Celsius.

4. Système de refroidissement selon la revendication 2 ou 3, **caractérisé en ce que** le régulateur (9) est muni d'un commutateur à retard de temps (14), pour commuter sur marche à nouveau le compresseur (5) après un retard de temps prédéterminé, à la condition que la température de l'évaporateur (3) soit plus élevée qu'une température prédéterminée.

5. Système de refroidissement selon l'une des revendications précédentes, **caractérisé en ce que**, entre le compresseur (5) et le condensateur (6), on a placé des moyens de séparation (15) pour séparer l'huile et le milieu de refroidissement et **en ce que** les moyens de séparation (15) sont munis d'un tuyau de ramenée d'huile (16) pour ramener l'huile vers le compresseur (5).
